**Europäisches Patentamt**

**European Patent Office**

**Office européen des brevets**

(11) Veröffentlichungsnummer: **0 249 700**
**A2**

(12) # EUROPÄISCHE PATENTANMELDUNG

(21) Anmeldenummer: **87105175.1**

(51) Int. Cl.⁴: **A 47 J 31/057, A 47 J 31/06**

(22) Anmeldetag: **08.04.87**

(30) Priorität: **18.04.86 DE 3613119**
**26.09.86 DE 3632686**

(71) Anmelder: **Gesen, Wolfgang, Splitting rechts 41, D-2990 Papenburg 1 (DE)**
Anmelder: **Schulte, Wilhelm, Splitting rechts 41, D-2990 Papenburg 1 (DE)**

(43) Veröffentlichungstag der Anmeldung: **23.12.87**
**Patentblatt 87/52**

(72) Erfinder: **Gesen, Wolfgang, Splitting rechts 41, D-2990 Papenburg 1 (DE)**
Erfinder: **Schulte, Wilhelm, Splitting rechts 41, D-2990 Papenburg 1 (DE)**

(84) Benannte Vertragsstaaten: **AT BE CH DE ES FR GB IT LI NL SE**

(74) Vertreter: **Patentanwälte Schulze Horn und Hoffmeister, Goldstrasse 36, D-4400 Münster (DE)**

(54) **Kaffeemaschine zur Herstellung von Kaffeesud.**

(57) Die Erfindung betrifft eine Kaffeemaschine zur Herstellung von Kaffee mit einem Wassererhitzer, einem Heißwasserauslaufbereich, einer darunter angeordneten Aufnahmeschale für einen Kaffeemehl enthaltenden, geschlossenen Kaffeefilter für die einmalige Verwendung in der Kaffeemaschine und einer Standfläche für ein den Kaffeesud aufnehmendes Gefäß, welche dadurch gekennzeichnet ist, daß die lichte Höhe (H) zwischen dem die untere Beutellage (42) aufnehmenden Boden (31) der Aufnahmeschale (3) und der unteren Begrenzung des Wasserauslaufbereiches (2) nur geringfügig größer ist als die Ausgangshöhe (h) des verwendbaren Filterbeutels (4).

ACTORUM AG

## Kaffeemaschine zur Herstellung von Kaffeesud

Die Erfindung betrifft eine Kaffeemaschine zur Herstellung von Kaffee, mit einem Wassererhitzer, einem Heißwasserauslaufbereich, einer darunger angeordneten Aufnahmeschale für einen Kaffeemehl enthaltenden, geschlossenen Kaffeefilter für die einmalige Verwendung in der Kaffeemaschine und einer Standfläche für ein den Kaffeesud aufnehmendes Gefäß.

Derartige Kaffeemaschinen, die für die Aufnahme von Kaffeemehl enthaltenden geschlossenen Kaffeefiltern konzipiert sind, sind seit längerem bekannt und stehen insbesondere im gastronomischen und betrieblichen Bereich im Einsatz. Gerade in den genannten Bereichen sind die Kaffeemaschinen häufig Teil eines "Service-Paketes", in welchem ein Kaffeelieferant oder -hersteller eine Kaffeemaschine unter der Auflage kostenlos zur Verfügung stellt, daß regelmäßig eine Mindestmenge an Kaffee bzw. Kaffeefiltern von ihm bezogen wird. Nachteilig ist bei den bekannten Kaffeemaschinen jedoch, daß mit diesen auch eine Zubereitung von Kaffeesud auf herkömmliche Art, d. h. durch Einlegen einer offenen Filtertüte oder eines Filterblattes und Aufgeben von Kaffeemehl von Hand, möglich ist. Dies erlaubt eine unerwünschte Verwendung von preiswerterem Fremdkaffee bei über die Mindestabnahmemenge hinausgehendem Kaffeebedarf, wodurch dem Lieferanten des "Service-Paketes" beträchtliche Umsatzverluste entstehen können.

Weiterhin werden durch diese Verwendbarkeit von Fremdkaffee Manipulationsmöglichkeiten bei Umsatz- oder Verbrauchsabrechnungen geschaffen. Diese bestehen z. B. darin, daß von Gaststätten- oder Imbißpersonal lediglich ein Teil des erzeugten Kaffeesuds mit bestimmungsgemäß verwendetem Kaffee vom Lieferanten des "Service-Pakets" erzeugt und abgerechnet wird, während die übrige Menge auf Rechnung des Personals aus von diesem preisgünstig eingekauftem Fremdkaffee erzeugt wird.

Es stellt sich daher die Aufgabe, eine Kaffeemaschine der eingangs genannten Art zu schaffen, die die aufgeführten Nachteile vermeidet, und die eine Herstellung von Kaffeesud unter Verwendung von Fremdfiltern und/oder Fremdkaffee und damit Umsatzverluste für den Lieferanten oder Abrechnungsmanipulationen ausschließt, ohne daß dies in irgendeiner Weise zu Lasten der Qualität des erzeugten Kaffeesuds geschieht. Weiterhin soll nicht nur sichergestellt sein, daß nur spezielle Filterbeutel verwendet werden können, sondern es soll auch eine verbesserte Ausnutzung des verwendeten Kaffeemehls sichergestellt werden.

Die Lösung dieser Aufgabe gelingt erfindungsgemäß durch eine Kaffeemaschine der eingangs genannten Art, die derart gestaltet ist, daß die lichte Höhe zwischen dem die untere Beutellage aufnehmenden Boden der Aufnahmeschale und der unteren Begrenzung des Wasserauslaufbereichs nur geringfügig größer ist als die Ausgangs-höhe des verwend-

baren Filterbeutels.

Vorteilhaft wird durch die solcherart gestaltete Kaffeemaschine erreicht, daß eine Verwendung von Fremdkaffee in loser Form oder in anderen Filtern ausgeschlossen ist. Dies beruht auf der besonderen Funktionsweise der Kaffeemaschine, die nur eintritt, wenn die bestimmungsgemäßen Filterbeutel verwendet werden. Die besondere Funktionsweise besteht darin, daß sich der Filterbeutel bei Beginn der Aufgabe von Heißwasser aufbläht und mit seiner oberen Beutellage an den Wasserauslaufbereich anlegt. Das Aufblähen ergibt sich dadurch, daß in den Filterbeutel einströmendes Heißwasser Luft aus dem Kaffeemehl verdrängt, die zusammen mit sich bildendem Wasserdampf innerhalb des Beutels nach oben steigt. Da der Beutel bereits durchfeuchtet ist, ist er weitgehend luft- und dampfundurchlässig, so daß sich im Beutel ein geringer, für ein Aufblähen ausreichender Überdruck bildet. Dadurch, daß sich die obere Beutellage des vorzugsweise aus einem Vlies gebildeten Beutels an den Wasserauslaufbereich anlegt, wird das auslaufende Wasser weitestgehend zentral in den Filterbeutel eingeleitet. Mögliche Formen für den Wasserauslaufbereich sind dabei z. B. ein flacher ringwulstartiger Kranz oder eine in die Decke eingelegte Platte. Im Beutel verteilt sich das Heißwasser über das Kaffeemehl und durchströmt dieses unter effektiver Auslaugung gleichmäßig in seinem gesamten Volumen. Bei Verwendung falscher, d. h. fremder und nicht passender Filterbeutel kommt es dagegen zu einem radialen Abströmen von aufgegebenem Heißwasser entlang der oberen Beutellage und einem seitlichen Umströmen oder nur randlichen Durchströmen des Filterbeutels mit der Folge einer völlig mangelhaften Auslaugung des Kaffeemehls. Die Verwendung von Filterblättern und losem Kaffeemehl führt zu einem Ausschwemmen von Kaffeemehlpartikeln aus der Aufnahmeschale in den Kaffeesud, was dessen Qualität ebenfalls erheblich beeinträchtigt.

Fehlverwendungen der Kaffeemaschine führen demnach zu mangelhafter Qualität des Kaffeesuds, was den Benutzer der Kaffeemaschine von weiteren Versuchen in dieser Richtung abhält. Die Verwendung herkömmlicher Filtertüten und Trichterfilter ist schon dadurch ausgeschlossen, daß ein derartiger Filter wegen seiner Höhe gar nicht zwischen dem Wasserauslaufbereich und dem den Kaffeesud aufnehmenden Gefäß unterzubringen ist.

Eine bevorzugte Ausführung der Kaffeemaschine sieht vor, daß der Heißwasserauslaufbereich die Form eines offenen oder teilweise geschlossenen Ringspaltes hat. Hiermit wird eine gleichmäßige, über eine Ringfläche verteilte Wasseraufgabe auf den Filter erreicht. Von dieser Ringfläche aus kann sich das Wasser radial sowohl nach außen als auch nach innen zur gleichmäßigen Durchströmung des Kaffeemehls verteilen. Ein weiterer Vorteil liegt darin, daß das aufgegebene Wasser zumindest zum größten Teil entlang der Oberfläche der Innenseite des Kranzes nach unten strömt und so ohne heftigen Aufprall auf die obere Beutellage trifft. Eine unerwünschte Ablösung der oberen Beutellage vom Kranz wird so vermieden. Weitere mögliche Formen des Heißwasserauslaufbereiches sind z. B. Drei-, Vier- oder Mehrfachdüsen oder sogar eine Art Brausekopf mit einer Vielzahl von einzelnen Öffnungen.

Zur Sicherung einer zuverlässigen Funktion der Kaffeemaschine hat es sich als günstig erwiesen, daß ein Anlagesteg den Ringspalt außenseitig umgibt und der Durchmesser des Anlagesteges etwa das 0,1 bis 0,5fache des horizontalen Durchmessers des Filterbeutels beträgt. Innerhalb dieses Durchmesserbereiches erfolgt sowohl eine günstige Verteilung des aufgegebenen Heißwassers als auch eine zuverlässige, dichte Anlage der oberen Beutellage an den Anlagesteg, der sehr flach sein kann.

Um das Einlegen des Filterbeutels in die Aufnahmeschale und dessen Entfernung aus der Schale zu erleichtern, ist die Aufnahmeschale zweckmäßig aus der Kaffeemaschine entnehmbar und/oder relativ zu dieser verschiebbar, verschwenkbar oder klappbar angeordnet. Zur möglichst genauen Anpassung der Aufnahmeschale an die zur Verwendung in der Maschine vorgesehenen Filterbeutel ist es vorteilhaft, daß die Schale eine flache, in ihrer Tiefe etwa der Ausgangshöhe (h) des Filterbeutels entsprechende Schale mit gelochtem Boden ist. Weiterhin ist vorgesehen, daß die Aufnahmeschale in ihrer Grundform rechteckig ist und pyramidenstumpfförmig nach innen und unten verlaufende Seitenwände aufweist. Eine solche Schalenform ist relativ einfach herstellbar, was die Verwendung z. B. von an sich schwerer zu bearbeitendem Edelstahlblech erleichtert. Um die Schale zu stabilisieren und an die Form eines flachen Filterbeutels anzupassen, können in den Ecken der Seitenwände der Aufnahmeschale gleichschenklig dreieckförmige Einsätze als Teil der Seitenwände mit auf dem Schalenboden verlaufenden Basiskanten angeordnet sein.

Eine bevorzugte Ausgestaltung der Kaffeemaschine und ihrer Aufnahmeschale besteht darin, daß die Schale als entnehmbare Schublade mit Handgriff ausgebildet ist und daß das Gehäuse der Kaffeemaschine im Bereich des Auslaufes und der Aufnahmeschale Seitenwände aufweist, an deren Innenseite jeweils eine die Aufnahmeschale randseitig tragende und führende Schiene angebracht ist. Diese Gestaltung ist sowohl funktional als auch optisch günstig, denn es wird durch die Seitenwände an der Maschine und den Handgriff an der Schublade eine sichere und einfache Bedienbarkeit und zugleich ein geschlossenes, glattflächiges Aussehen der Maschine auch im Betrieb erzielt. Auch wird durch die geschlossene Ausgestaltung ein unerwünschter Aromaverlust durch zu starke Abgabe von Aromastoffen aus dem Kaffee an die Umgebungsluft vermieden.

Eine Alternative zu der vorgenannten Ausführung ist, daß die Aufnahmeschale unter entsprechend angepaßter Ausbildung ihrer Unterseite höhenrichtig auf das den Kaffeesud aufnehmende Gefäß aufsetzbar ist. Dies vereinfacht zwar die Gestaltung der Kaffeemaschine an sich, führt jedoch zu einem Verlust an Bedienungskomfort, da das Gefäß nicht unabhängig von der Schale von der Kaffeemaschine genommen werden kann. Bei Verwendung der Kaffeemaschine in Bereichen, wo es nicht auf die schnelle Zubereitung größerer Kaffeesudmengen ankommt, wie z. B. im Haushaltsbereich, stellt dieser Verlust aber keinen eigentlichen Nachteil dar, da dieser auch bei gängigen Kaffeemaschinen vorhanden ist.

Die erfindungsgemäße Aufgabe wird hinsichtlich der Ausbeute auch dadurch gelöst, daß der Boden der Aufnahmeschale eine zentrale Auslauföffnung und Rippen zur Einstellung eines Freiraums zwischen dem Boden und der unteren Beutellage der Kaffeemehlportion aufweist.

Sie kann dabei eine sich konisch nach oben öffnende Kontur besitzen.

Vorteilhaft kann die Aufnahmeschale rechteckig sein und an ihren Ecken halbkreisförmige Aussparungen aufweisen, durch welche eine Eignung der Aufnahmeschale nur für die speziellen Filterbeutel sichergestellt wird. Die Oberkanten der den Abstand bzw. Freiraum einstellenden Rippen kann schräg zur Auslauföffnung hin verlaufen, wobei die Rippen ca. 1/4 der Höhe der Seitenwände aufweisen können.

Klemmwülste können letztlich sicherstellen, daß die Aufnahmeschale in ihrer Position gehalten wird, ohne daß zusätzliche Mittel erforderlich wären.

Bevorzugte Ausführungsbeispiele der Erfindung werden im folgenden anhand von Zeichnungen näher erläutert. Die Zeichnungen zeigen im einzelnen:

Figur 1 eine Frontansicht einer Kaffeemaschine gemäß Erfindung in teilweise aufgeschnittener Darstellung,

Figur 2 die Kaffeemaschine aus Figur 1 in Seitenansicht, teils in Durchsicht,

Figur 3 eine Aufnahmeschale als Teil der Kaffeemaschine in perspektivischer Ansicht und

Figur 4 einen perspektivischen Teilschnitt durch die Aufnahmeschale gemäß der Erfindung.

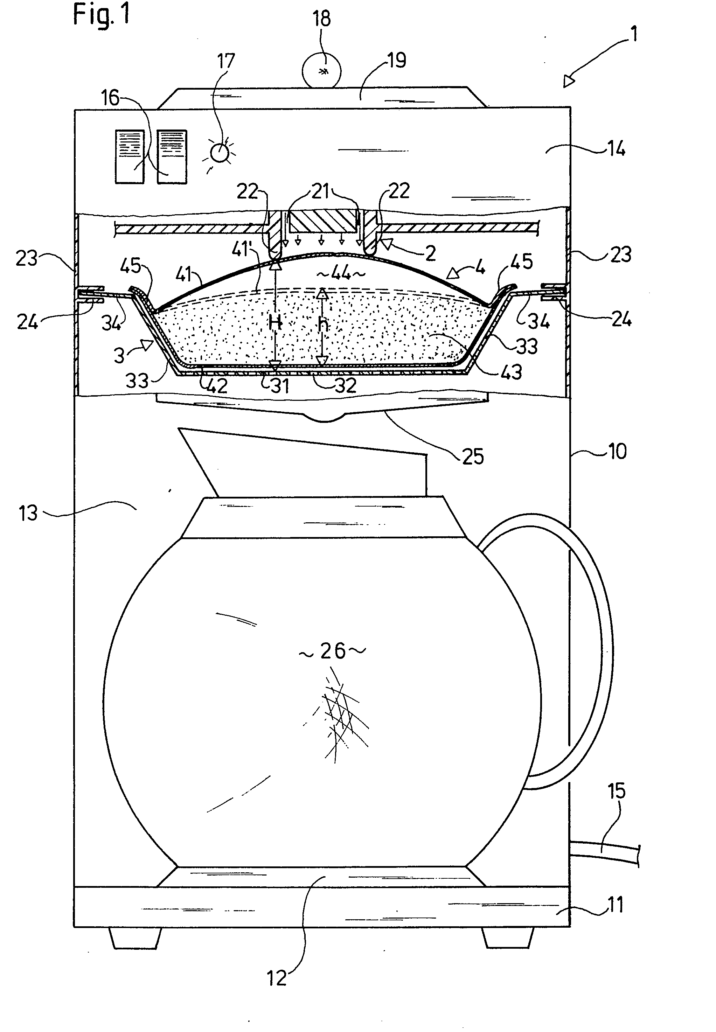

Wie die Figur 1 zeigt, besteht das dargestellte Ausführungsbeispiel der Kaffeemaschine 1 im wesentlichen aus einem Gehäuse 10 mit einem Fuß 11, einem Behälterteil 13 und einem Oberteil 14. Der Fuß 11 weist eine als Warmhalteplatte ausgebildete Standfläche 12 mit einer darauf stehenden Kanne 26 für Kaffeesud auf. Der mittlere Gehäuseteil ist als Behälterteil 13 ausgebildet und dient zur Aufnahme von Wasser. Das Oberteil 14 der Kaffeemaschine 1 weist auf seiner Oberseite eine weitere Warmhalteplatte 19 sowie einen Deckel 18 oberhalb des Behälterteils 13 auf. Weiterhin sind im Oberteil 14 zwei Bedienungsschalter 16 sowie eine Kontrolleuchte 17 angeordnet. Zur Versorgung der Kaffeemaschine mit elektrischer Energie dient eine Stromzuleitung 15. Soweit wie bisher beschrieben, entspricht die dargestellte Kaffeemaschine 1 gängigen Kaffeemaschinen.

Neu gegenüber bekannten Kaffeemaschinen ist bei der dargestellten Kaffeemaschine 1 die Gestaltung bzw. Anordnung von Heißwasserauslaufbereich 2, Filteraufnahmeschale 3 und Kaffeefilter 4. Der Wasserauslaufbereich 2 ist als Ringspalt 21 ausgebildet, der außenseitig von einem nach unten vorstehenden ringwulstartigen Anlagesteg 22 umgeben ist. Unterhalb des Wasserauslaufbereiches 2 ist die Aufnahmeschale 3 angeordnet, die im dargestellten Ausführungsbeispiel als Schublade ausgebildet ist. Die Aufnahmeschale 3 weist einen Boden 31 mit Löchern 32 auf, welcher von Seitenwänden 33 umgeben ist, die vom Boden 31 aus gesehen schräg nach oben und außen verlaufen. An ihrem oberen Ende gehen die Seitenwände in einen annähernd waagerecht nach außen ragenden Führungs- und Tragrand 34 über. Der Rand 34 ist seitlich in Trag- und Führungsschienen 24 verschiebbar gelagert, welche an der Innenseite zweier Seitenwände 23 des Gehäuses 10 der Kaffeemaschine 1 angeordnet sind. In die Schale 3 ist ein Filterbeutel 4 mit einer darin eingeschlossenen Kaffeemehlportion 43 eingelegt. Die untere Beutellage 42 liegt dabei an dem Boden 31 sowie den Seitenwänden 33 der Schale 3 an. In seinem Grundzustand hat der Beutel 4 eine Höhe h, wobei die obere Beutellage entsprechend Bezugsziffer 41' auf der Kaffeemehlportion 43 aufliegt. Im Randbereich 45 sind die beiden Beutellagen kaffeemehldicht miteinander verbunden.

Während des Betriebes der Kaffeemaschine 1, d. h. während der Erzeugung von Kaffeesud, nimmt die obere Beutellage eine Position gemäß Bezugsziffer 41 ein. In dieser Position liegt die obere Beutellage 41 an dem vorstehenden Anlagesteg 22 an. Das durch den Ringspalt 22 ausströmende Heißwasser wird so gezielt zentral in den Filterbeutel 4 geleitet, von wo aus es sich innerhalb der Kaffeemehlportion 43 verteilt und diese unter Auslaugung durchströmt. Das Anlegen der oberen Beutellage 41 an den Anlagesteg 22 ergibt sich durch die Ausnutzung eines Aufbläheffektes, der daraus resultiert, daß bei Beginn der Heißwasseraufgabe Luft aus dem Kaffeemehl 43 verdrängt wird und sich zusammen mit entstehendem Wasserdampf oberhalb des Kaffeemehls 43 in einem Luft- und Dampfraum 44 sammelt. Da die bereits durchfeuchtete obere Beutellage 41 weitgehend luft- und dampfundurchlässig ist, bildet sich innerhalb des Raumes 44 ein ausreichender Überdruck, um die obere Beutellage 41 anzuheben und an den Anlagesteg 22 anzulegen. Wie aus der Figur ersichtlich ist, käme es ohne den gezielt herbeigeführten Aufbläheffekt zu einem seitlichen Abströmen des aufgegebenen Heißwassers zu den Seitenwänden 33 der Schale 3, von wo aus das Wasser auf dem kürzesten Wege unter Umgehung des größten Teils des Kaffeemehls 43 abströmen würde. Wichtig für das Funktionieren der Kaffeemaschine ist, daß die Höhe H zwischen dem unteren Ende des Anlagesteges 22 und dem Boden 31 der Aufnahmeschale nur geringfügig größer ist als die Ausgangshöhe h des Filterbeutels 4. Gleichzeitig muß zumindest die obere Lage 41 bzw. 41' des Filterbeutels 4 so flexibel sein, daß der im Innenraum 44 entstehende Druck für ein sicheres Anheben und Anlegen an den Anlagesteg 22 ausreicht.

Anstelle einer mit Löchern 32 versehenen Platte kann der Bodens 31 der Schale 3 auch als Sieb- oder Gitterboden ausgeführt sein. Der die Aufnahmeschale 3 nach unten verlassende Kaffeesud wird in einem flachen Trichter 25 gesammelt und zentral in die darunter stehende Kanne 26 geleitet.

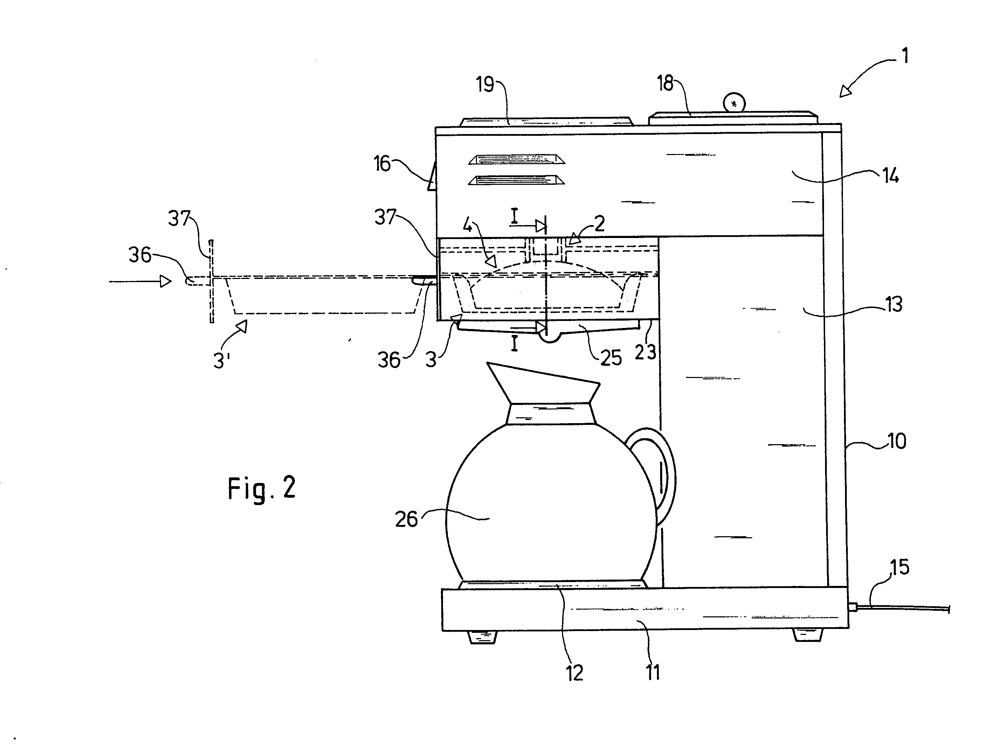

Figur 2 zeigt wiederum die Kaffeemaschine 1 aus Figur 1, diesmal in einer Seitenansicht, mit einer als Schublade ausgeführten Aufnahmeschale 3. Von der Kaffeemaschine 1 ist auch hier deren Gehäuse 10 mit Fuß 11, Behälterteil 13 und Oberteil 14 erkennbar. Auf der auf dem Fuß 11 angeordneten, als Warmhalteplatte ausgebildeten Standfläche 12 ist wiederum die den Kaffeesud aufnehmende Kanne 26 erkennbar. Weiterhin ist die Stromzuleitung 15 im Bereich des Fußes 11 in die Kaffeemaschine 1 geführt.

Im Bereich des Oberteils 14 ist wieder der Deckel 18 zum Verschließen des Behälterteils 13, die Warmhalteplatte 19 für eine eventuell vorhandene zweite Kanne sowie ein Bedienungsschalter 16 zu erkennen. Unterhalb des vorkragenden Teils des Oberteils 14 der Maschine 1 ist, da hinter einer der Seitenwände 23 liegend, die Anordnung von Wasserauslaufbereich 2, Filterbeutel 4 und Aufnahmeschale 3 in gestrichelter Darstellung angedeutet. Unterhalb dieser Anordnung ist nach unten geringfügig über die Seitenwand 23 vorragend der flache Auslauftrichter 25 oberhalb der Kanne 26 erkennbar.

Wie weiterhin aus der Figur 2 entnehmbar ist, ist im dargestellten Ausführungsbeispiel die Aufnahmeschale 3 als aus der Maschine 1 herausziehbare Schublade 3' ausgebildet. Zur Betätigung weist die Schublade 3' einen außenliegenden Handgriff 36 sowie eine die Anordnung in Bewegungsrichtung der Schublade 3' gesehen während des Betriebes der Maschine 1 abschließende Frontplatte 37 auf, deren Höhe etwa der der Seitenwände 23 entspricht.

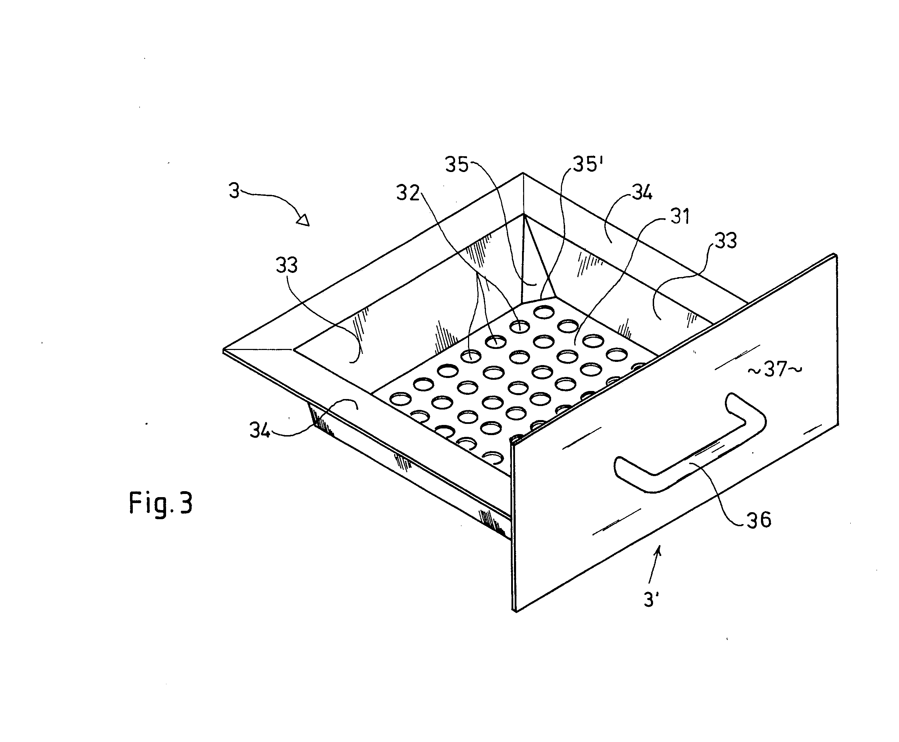

Die Schublade 3' ist in Figur 3 noch einmal separat in perspektivischer Ansicht dargestellt. Die Schublade 3' wird gebildet durch die Aufnahmeschale 3 sowie die einseitig daran anschließende Frontplatte 37 mit dem Handgriff 36. Der Boden 31 der Schale 3 weist eine Vielzahl von Löchern 32 auf, durch die der bereitete Kaffeesud nach unten abströmen kann. Die Seitenwände 33 verlaufen vom Boden 31 aus gesehen schräg nach oben und außen nach Art eines umgekehrten Pyramidenstumpfes. In die Ecken der Seitenwände 33 sind, wie an der einen sichtbaren Ecke erkennbar ist, gleichschenklig dreieckförmige Einsätze 35 als Teil der Seitenwände 33 eingesetzt. Mit seiner Basiskante 35' verläuft der Einsatz 35 entlang des Bodens 31. Hierdurch wird die Schale 3 in ihrer Form stabilisiert und in ihrem Inneren an die Form des flachen Filterbeutels 4 angepaßt.

Außer wie im dargestellten Ausführungsbeispiel gezeigt, kann die Aufnahmeschale 3 statt als Schublade auch in anderer Weise entnehmbar oder gelenkig mit dem Gehäuse 10 der Kaffeemaschine 1 verbunden sein. Eine weitere Alternative besteht darin, die Aufnahmeschale 3 bei entsprechender Ausbildung ihrer Unterseite und passender Ausbildung des Oberrandes der Kanne 26 unmittelbar in der richtigen Höhe auf diese aufzusetzen.

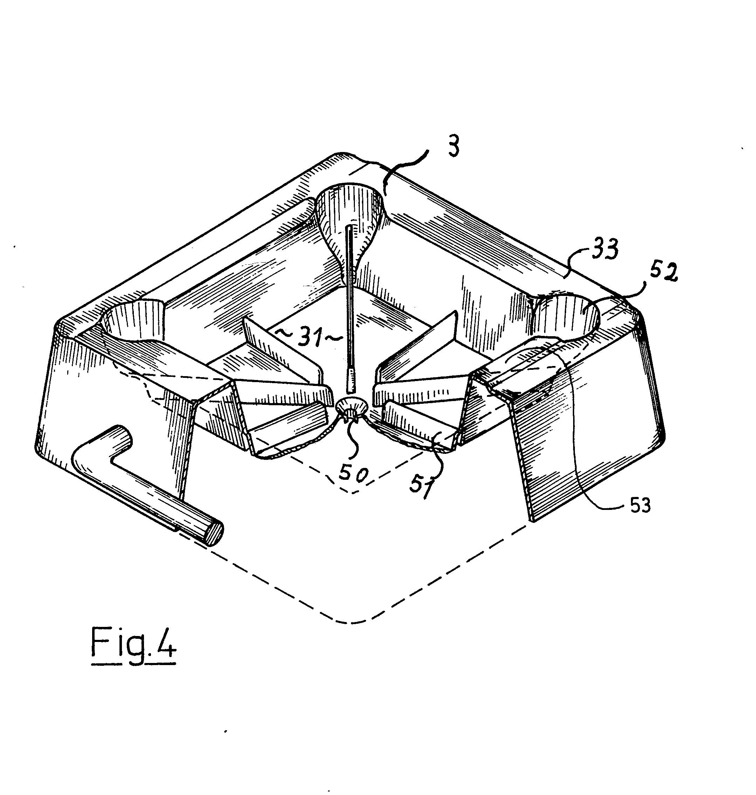

Gemäß Figur 4 ist die Aufnahmeschale 3 rechteckig und weist einen konisch zu einer Auslauföffnung 50 abfallenden Boden 31 auf, welcher eine Anzahl von Rippen 51 trägt, die zwischen sich einen Freiraum zum Durchfluß des Kaffeesuds bilden.

Die Seitenwände 33 der Schale 3 weisen Eckaussparungen 52 auf, die ca. halbkreisförmig sind und in die entsprechend geformte Teile der Filterbeutel 4 eingreifen können. Die Höhe der Rippen 51 beträgt ca. 1/4 der Höhe der Seitenwände 33, die Klemmwülste 53 aufweisen, mittels derer eine sichere Halterung der Schale 3 in der eigentlichen Kaffeemaschine erfolgt.

Die Schale 3 ist mit den Rippen 51 leicht in einer Blasform zu fertigen und ihre Herstellung ist damit wirtschaftlich besonders vorteilhaft. Sie gewährleistet zum einen, daß die Filterbeutel zur vollständigen Ausnutzung des Kaffeemehls ausgelaugt werden können, wobei aber eine Verwendung von beliebigen Filterbeuteln sicher ausgeschlossen ist. Die erfindungsgemäßen Schalen verbessern also die Funktion der Kaffeemaschine nach der Stammanmeldung gegenüber der bereits vorgeschlagenen Schale erheblich. In diesem Zusammenhang kann von einer idealen Lösung der anstehenden Probleme gesprochen werden.

Patentansprüche:

1. Kaffeemaschine zur Herstellung von Kaffee, mit einem Wassererhitzer, einem Heißwasserauslaufbereich, einer darunter angeordneten Aufnahmeschale für einen Kaffeemehl enthaltenden, geschlossenen Kaffeefilter für die einmalige Verwendung in der Kaffeemaschine und einer Standfläche für ein den Kaffeesud aufnehmendes Gefäß, dadurch gekennzeichnet, daß die lichte Höhe (H) zwischen dem die untere Beutellage (42) aufnehmenden Boden (31) der Aufnahmeschale (3) und der unteren Begrenzung des Wasserauslaufbereichs (2) nur geringfügig größer ist als die Ausgangshöhe (h) des verwendbaren Filterbeutels (4).

2. Kaffeemaschine nach Anspruch 1, dadurch gekennzeichnet, daß der Heißwasserauslaufbereich (2) die Form eines offenen oder teilweise geschlossenen Ringspaltes (21) hat.

3. Kaffeemaschine nach den Ansprüchen 1 und 2, dadurch gekennzeichnet, daß der Anlagesteg (22) den Ringspalt (21) außenseitig umgibt und der Durchmesser des Anlagesteges (22) etwa das 0,1 bis 0,5fache des horizontalen Durchmessers des Filterbeutels (4) beträgt.

4. Kaffeemaschine nach den Ansprüchen 1 bis 3, dadurch gekennzeichnet, daß die Aufnahmeschale (3) aus der Kaffeemaschine (1) entnehmbar und/oder relativ zu dieser verschiebbar, verschwenkbar oder klappbar angeordnet ist.

5. Kaffeemaschine nach den Ansprüchen 1 bis 4, dadurch gekennzeichnet, daß die Aufnahmeschale (3) eine flache, in ihrer Tiefe etwa der Ausgangshöhe (h) des Filterbeutels (4) entsprechende Schale (3) mit gelochtem Boden (31) ist.

6. Kaffeemaschine nach den Ansprüchen 1 bis 5, dadurch gekennzeichnet, daß die Aufnahmeschale (3) in ihrer Grundform rechteckig ist und pyramidenstumpfförmig nach innen und unten verlaufende Seitenwände (33) aufweist.

7. Kaffeemaschine nach den Ansprüchen 1 bis 6, dadurch gekennzeichnet, daß in den Ecken der Seitenwände (33) der Aufnahmeschale (3) gleichschenklig dreieckförmige Einsätze (35) als Teil der Seitenwände (33) mit auf dem Schalenboden (31) verlaufenden Basiskanten (35') angeordnet sind.

8. Kaffeemaschine nach den Ansprüchen 1 bis 7, dadurch gekennzeichnet, daß die Aufnahmeschale (3) als entnehmbare Schublade (3') mit Handgriff (36) ausgebildet ist und daß das Gehäuse (10) der Kaffeemaschine (1) im Bereich des Auslaufes (2) und der Aufnahmeschale (3) Seitenwände (23) aufweist, an deren Innenseite jeweils eine die Aufnahmeschale (3) randseitig tragende und führende Schiene (24) angebracht ist.

9. Kaffeemaschine nach den Ansprüchen 1 bis 7, dadurch gekennzeichnet, daß die Aufnahmeschale (3) unter entsprechend angepaßter Ausbildung ihrer Unterseite höhenrichtig auf das den Kaffeesud aufnehmende Gefäß (26) aufsetzbar ist.

10. Kaffeemaschine nach einem der Ansprüche 1 bis 9, dadurch gekennzeichnet, daß der Boden (31) der Aufnahmeschale (3) eine zentrale Auslauföffnung (50) und Rippen (51) zur Einstellung eines Freiraums zwischen dem Boden (31) und der unteren Beutellage (42) der Kaffeemehlportion (43) aufweist.

11. Kaffeemaschine nach einem der Ansprüche 1 bis 10, dadurch gekennzeichnet, daß die Oberkante der Rippen (51) zur Auslauföffnung (50) hier nach unten abwärts verlaufen.

12. Kaffeemaschine nach einem der Ansprüche 1 bis 11, dadurch gekennzeichnet, daß die Aufnahmeschale (3) rechteckig ist und ihre Ecken halbkreisförmige Aussparungen (52) aufweisen.

13. Kaffeemaschine nach einem der Ansprüche 1 bis 12, dadurch gekennzeichnet, daß die Rippen (51) eine Höhe von ca. 1/4 der Höhe der Seitenwände (33) der Schale (3) aufweisen.

14. Kaffeemaschine nach einem der Ansprüche 1 bis 13, dadurch gekennzeichnet, daß die Seitenwände der Schale (3) Klemmülste (53) aufweisen.

15. Kaffeemaschine nach einem der Ansprüche 1 bis 14, dadurch gekennzeichnet, daß der Boden (31) eine sich konisch nach oben öffnende Kontur aufweist.

Fig. 1

1|4

0249700

Fig. 2

Fig.3

0249700

4/4

3

33
52

~31~

50      51

53

Fig.4